# EUROPÄISCHE PATENTSCHRIFT

(11) **EP 0 258 783 B1**
(45) Veröffentlichungstag und Bekanntmachung des Hinweises auf die Patenterteilung: **31.03.1993**
(21) Anmeldenummer: 87112291.7
(22) Anmeldetag: 25.08.1987
(51) Int. Cl.: C09J 7/02, G09F 3/10

(54) **Haftetikett**
Adhesive label
Etiquette

(30) Priorität: 02.09.1986 DE 3629770; 16.09.1986 DE 3631397
(43) Veröffentlichungstag der Anmeldung: 09.03.1988
(73) Patentinhaber: Jackstädt GmbH, D-42103 Wuppertal (DE)
(72) Erfinder: Hürter, Hans-Ulrich, Dr., D-5830 Schwelm (DE); Frenkler, Dieter, D-5830 Schwelm (DE)
(74) Vertreter: Gesthuysen, Hans Dieter, Dipl.-Ing.

(56) Entgegenhaltungen:
- DE-B- 1 560 067
- US-A- 4 668 576

## Beschreibung

Die Erfindung betrifft ein Haftetikett, bestehend aus einem Druckträger, einem Primer auf der Rückseite des Druckträgers, einer wiederablösbaren Haftklebeschicht auf der vom Druckträger abgewandten Seite des Primers, einer Abdeckschicht auf der vom Primer abgewandten Seite der Haftklebeschicht und ggf. einer klebstoffabweisenden Schicht zwischen der Haftklebeschicht und der Abdeckschicht. Gegenstand der Erfindung ist aber auch ein besonders zweckmässiges Verfahren zur Herstellung eines Haftetiketts, bei dem der Primer auf die Rückseite des Druckträgers aufgetragen wird.

Haftetiketten der in Rede stehenden Art sind grundsätzlich seit langer Zeit bekannt (vgl. die DE - B - 1 560 067, die DE - A - 25 46 108 und die DE - A - 34 17 746). Besondere Anforderungen an die chemische Zusammensetzung der verschiedenen Schichten eines solchen Haftetiketts, insbesondere an die chemische Zusammensetzung der Haftklebeschicht, stellen Haftetiketten, die wiederablösbar sind, die man also nach dem Aufkleben wieder ablösen kann. Der Druckträger, der aus einer Vielzahl von Materialien bestehen kann, zumeist aber aus Papier besteht und der die eigentliche Oberfläche des Haftetiketts bildet, ist meist nur begrenzt mechanisch beanspruchbar und erfordert somit für die Haftklebeschicht einen geringen Schälwert. Gleichwohl muß die Haftklebeschicht auf dem zu beklebenden Substrat optimal haften. Das Material der Haftklebeschicht muß einerseits sehr fließfähig sein, um ein Haftetikett möglichst rückstandsfrei abziehen zu können, muß andererseits auch einen guten inneren Zusammenhalt aufweisen. Der Schälwert darf auch in Abhängigkeit von der Aufklebedauer nicht allzu stark ansteigen, sollte vielmehr optimalerweise möglichst konstant sein. Schließlich muß die Adhäsion der Haftklebeschicht zum Druckträger unbeschadet der guten Haftfähigkeit auf dem zu beklebenden Substrat letztlich größer sein als zu dem zu beklebenden Substrat.

Gerade die besonderen Anforderungen an ein wiederablösbares Haftetikett haben dazu geführt, daß man dem Primer, der auf der Rückseite des Druckträgers aufgebracht ist, besonderes Interesse gewidmet hat. Die zuvor erläuterten Forderungen stellen letztlich erhebliche Forderungen an diesen Primer. Im Stand der Technik wird mit einem in flüssiger Phase aufgebrachten Primer gearbeitet, der nach kurzer Antrocknung mit dem noch in flüssiger Phase befindlichen Klebemittel der Haftklebeschicht beschichtet wird. Sowohl beim Primer als auch beim Klebemittel handelt es sich um in leichtflüchtigen flüssigen Kohlenwasserstoffen, kurz Lösungsmittel genannt, gelöste Stoffe.

Ein besonderes Problem besteht bei den bekannten Haftetiketten in deren Alterungsneigung durch Wanderung von Molekülen aus der Haftklebeschicht in den Druckträger und durch chemische Veränderung der Haftklebeschicht. Ausserdem stellt die Verwendung von umweltbelastenden Lösungsmitteln für Primer und Klebemittel der Haftklebeschicht ein erhebliches Problem dar. Schließlich ist auch die Preiswürdigkeit der bekannten wiederablösbaren Haftetiketten noch nicht befriedigend.

Im übrigen ist ein Haftklebematerial bekannt (vgl. die US - A - 4,668,576), das zum Schutz von Öl- und Gasleitungen verwendet wird und aus einem Polyethylenträgerfilm, einer Haftklebeschicht und einem Primer zwischen dem Polyethylenträgerfilm und der Haftklebeschicht besteht, wobei die Haftklebeschicht eine Butylkautschukbasis hat und der Primer Butylkautschuk, einem Polyisocyanat und einem organischen Lösungsmittel besteht. Dieses Haftklebematerial ist jedoch für Haftetiketten nicht, jedenfalls nicht gut geeignet.

Der Lehre der Erfindung liegt nun die Aufgabe zugrunde, das bekannte, zuvor erläuterte Haftetikett vom Produkt und von der Herstellung her hinsichtlich Wiederablösbarkeit, Alterungsbeständigkeit, Verarbeitbarkeit, Umweltverträglichkeit und Preiswürdigkeit zu verbessern.

Das erfindungsgemäße Haftetikett, bei dem die zuvor aufgezeigte Aufgabe gelöst ist, ist dadurch gekennzeichnet, daß der Primer aus isocyanatterminiertem Polyurethan besteht und lösungsmittelfrei ist und daß die Haftklebeschicht aus in Wasser dispergiertem Polyacrylsäureester (Acrylsäureestercopolymer) besteht.

Erfindungsgemäß ist erkannt worden, daß dem Material des Primers und der Haftklebeschicht bei einem Haftetikett der in Rede stehenden Art insbesondere unter dem Gesichtspunkt der Wiederablösbarkeit eine entscheidende Bedeutung zukommt. Gerade die chemischen Reaktionen zwischen dem Druckträger, dem Primer und der Haftklebeschicht unter Berücksichtigung der zeitabhängig ablaufenden Aushärtung des Primers führen zu der gewünschten durchgreifenden Verankerung der Haftklebeschicht am Druckträger, zu der gewünschten Verbundbildung des Haftetiketts.

Für niedermolekulare isocyanatterminierte Polyurethane gilt die allgemeine Reaktionsgleichung

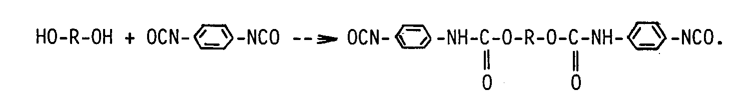

Für ein Polyetherdiol als Restgruppe erhält man dann die Formel

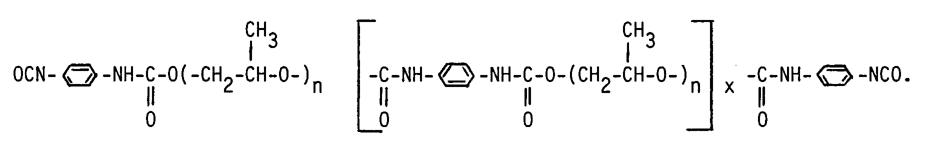

Dies ist nur ein Beispiel für eine bestimmte Restgruppe, wobei sich die Werte von n und x in weiten Grenzen verändern lassen. Wesentlich ist, daß bei isocyanatterminierten Verbindungen der Zutritt von Wasser aus der Luft bzw. aus dem z. B. als Druckträger verwendeten Papier zur Bildung von Polyharnstoffderivaten führt, so daß eine hochgradige Vernetzung die Folge ist. Parallel dazu erfolgen Bindungen an funktionelle Gruppen des Druckträgers und der Haftklebeschicht (OH-Gruppe, COOH-Gruppe, NH₂-Gruppe etc.) mit dem Ergebnis einer reaktiven Verankerung der terminierenden Isocyanatgruppen des Primers.

Zur Eigenschaftsmodifikation des Primers können Füllstoffe zugesetzt sein. Besonders empfiehlt es sich da, dem Primer als Füllstoff eine hochdisperse, pyrogene, insbesondere hydrophobierte, vorzugsweise mittels Dichlordimethylsilan hydrophobierte Kieselsäure zuzusetzen. Damit können die fließtechnischen Eigenschaften des Primers und dessen Aushärtungsverhalten beeinflußt werden.

Eine besondere Bedeutung in Hinsicht der Umweltverträglichkeit ergibt sich dadurch, daß isocyanatterminiertes Polyurethan ohne weiteres lösungsmittelfrei hergestellt werden kann. Ein solcher lösungsmittelfreier Primer läßt sich problemlos mit den für lösungsfreie Kaschierkleber üblichen Auftragseinrichtungen verarbeiten.

Versuche haben gezeigt, daß für die bei einem erfindungsgemäßen Haftetikett zu verwendenden Primer ein Auftragsgewicht zwischen 1,0 und 5,0 g/m², vorzugsweise zwischen 1,5 und 2,5g/m², insbesondere von etwa 2,0 g/m² empfehlenswert ist. Von der Luftfeuchtigkeit braucht dabei der Primer auch dann, wenn er lösungsmittelfrei ist, nicht abgeschlossen zu werden.

Üblicherweise wird bei den erfindungsgemäß für ein Haftetikett der in Rede stehenden Art verwendeten Primern ein Aushärten des Primers innerhalb von etwa einer Woche erfolgen. Nach dem Aushärten ist die Gefahr der Wanderung von Molekülen des Klebemittels in den Druckträger extrem gering. Durch die Auswahl und die Einstellung des Primers wird aber erfindungsgemäß erreicht, daß auch während dieser Aushärtungszeit keine wesentliche Wanderung von Molekülen des Klebemittels in den Druckträger stattfindet. Demgegenüber erfolgt hier eben die reaktive Bindung in der weiter oben näher erläuterten Weise über die endständigen Isocyanatgruppen.

Generell gilt für die Auswahl der Haftklebeschicht, daß diese genügend Wasserstoffatome für den Aufbau reaktiver Bindungen zum Primer haben muß und daß die Klebeeigenschaften insbesondere die Anforderungen der Wiederablösbarkeit erfüllen. Dabei ist zu berücksichtigen, daß die Eigenschaften des erfindungsgemäß vorhandenen Primers im allgemeinen dazu führen, daß die Haftklebeschicht nach dem Aushärten etwas härter ist als nach der grundsätzlichen chemischen Zusammensetzung zu erwarten, - Folge der reaktiven Bindungen zum Primer. Im übrigen empfiehlt es sich, daß das Trockenauftragsgewicht der Haftklebeschicht ca. 17 bis 23 g/m², vorzugsweise ca 18 bis 22g/m², insbesondere ca. 20 g/m², beträgt.

Hinsichtlich der Abdeckschicht empfiehlt es sich für das erfindungsgemäße Haftetikett, diese mit der klebstoffabweisenden Schicht gemeinsam aus Silikonpapier auszuführen, eine hinsichtlich der Verarbeitbarkeit und Preiswürdigkeit hervorragende Lösung.

Mit dem erfindungsgemäßen Haftetikett werden hinsichtlich der Wiederablösbarkeit hervorragende Ergebnisse erzielt, da die durch den Primer verursachte Verbundwirkung ein glattes Abziehen der Haftklebeschicht vom beklebten Substrat begünstigt. Die Alterungsbeständigkeit des Haftetiketts ist hervorragend, bedingt durch die Sperrfunktion des Primers der erfindungsgemäßen Art. Die Verarbeitbarkeit gewinnt dadurch, daß wegen der hervorragenden Verankerung der einzelnen Schichten miteinander durch den Primer das Haftetikett leicht geschnitten und gestanzt werden kann, ohne daß die Haftklebeschicht an den Schnitt- bzw. Stanzstellen austritt, so daß eine Weiterverarbeitung - Rollenschneiden, Formatschneiden, Etikettenstanzen - ohne weiteres möglich ist. Die Verwendung von lösungsmittelfreien Materialien führt zu einer hervorragenden Umweltverträglichkeit und beeinflußt gleichzeitig die Preiswürdigkeit günstig.

Eingangs ist erläutert worden, daß die Lehre der Erfindung auch auf die Angabe eines verbesserten Verfahrens zur Herstellung eines Haftetiketts der in Rede stehenden Art gerichtet ist. Insoweit wird die zuvor aufgezeigte Aufgabe dadurch gelöst, daß die Haftklebeschicht auf die Abdeckschicht bzw. die mit der Abdeckschicht verbundene klebstoffabweisende Schicht aufgetragen wird, daß danach ggf. die Haftklebeschicht angetrocknet wird und daß danach die Schichtung aus Abdeckschicht, ggf. klebstoffabweisender Schicht und Haftklebeschicht und die Schichtung aus Druckträger und Primer durch Auflage der Haftklebeschicht auf dem Primer vollflächig miteinander verbunden werden. Erfindungsgemäß ist erkannt worden, daß die Haftklebeschicht besonders zweckmäßig in Verbindung mit der Abdeckschicht austrocknet und dann erst, nach Erreichen eines genau vorherbestimmten Trocknungsgrades, mit dem Primer in Berührung gebracht werden sollte. Durch das erfindungsgemäße Verfahren ist es möglich, daß der auf der Innenseite des Druckträgers aufgebrachte Primer seinerseits einen genau vorherbestimmten, optimalen Trocknungsgrad hat, so daß das gemeinsame weitere Aushärten des Primers und der Haftklebeschicht im Verbund exakt vorherbestimmt werden kann. Im Stand der Technik, von dem die Lehre der Erfindung ausgeht, war nur ein vorheriges, definiertes Vortrocknen des Primers möglich, nicht aber der Haftklebeschicht. Demgegenüber wird mit dem erfindungsgemäßen Verfahren die Möglichkeit geschaffen, zusätzlich die Wanderfähigkeit der Moleküle der Haftklebeschicht durch Vortrocknung gezielt zu beeinflussen, bevor die Haftklebeschicht mit dem Primer in Verbindung gebracht wird.

Mit dem erfindungsgemäßen Verfahren wird gleichzeitig eine verbesserte Verarbeitbarkeit der Haftklebeschichten erreicht, indem die hervorragende handhabbare Abdeckschicht gewissermaßen invers als Träger für die Haftklebeschicht genutzt wird.

Insgesamt ergibt sich mit dem erfindungsgemäßen Verfahren die Möglichkeit, ein hinsichtlich der Wiederablösbarkeit und der Alterungsbeständigkeit erheblich verbessertes Haftetikett zu schaffen, wobei gleichzeitig herstellungstechnisch problemlos und preiswürdig gearbeitet werden kann.

In verfahrensmäßiger Hinsicht empfiehlt es sich, so vorzugehen, daß die den Auftrag der Haftklebeschicht selbst betreffenden Verfahrensschritte zeitlich zuerst ablaufen und daß die Verbindung der beiden Schichtungen zeitlich unmittelbar nach dem Auftrag des Primers auf den Druckträger erfolgt. Der zeitliche Abstand ist mit 1 bis 5 s, vorzugsweise ca. 2 bis 3 s, für die erfindungsgemäß verwendeten Primer optimal bemessen. Der Auftrag des Primers sollte bei einer Temperatur zwischen 90° und 100° C erfolgen, vorzugsweise bei etwa 95° C. Für diesen Auftrag kommt eine an sich bekannte heizbare Auftragseinrichtung in Frage.

Entsprechend dem anfänglichen Aushärtungsverlauf hinsichtlich des Primers, d. h. dem Verankerungsverlauf innerhalb der ersten 24 Stunden, wie zuvor erläutert, empfiehlt es sich, das z. B. aufgewickelte Haftetikettenmaterial vor der Weiterverarbeitung, also vor dem Schneiden und Stanzen zu einzelnen Haftetiketten, 16 bis 24 Stunden zwischenzulagern.

Im folgenden wird die Erfindung anhand einer lediglich ein Ausführungsbeispiel darstellenden Zeichnung nochmals kurz erläutert. Außerdem werden zwei Ausführungsbeispiele in zahlenmäßiger Hinsicht angegeben. In der Zeichnung zeigt
- Fig. 1: schematisch und im Schnitt ein erfindungsgemäßes Haftetikett vor dem letzten Verfahrensschritt der Herstellung und
- Fig. 2: das Haftetikett aus Fig. 1 nach dem letzten Verfahrensschritt der Herstellung.

Die Fig. 1 und 2 lassen gut erkennen, daß das Haftetikett nach der Lehre der Erfindung im hier dargestellten Ausführungsbeispiel aus einem Druckträger 1, einem Primer 2 auf der Rückseite des Druckträgers 1, einer Haftklebeschicht 3 auf der vom Druckträger 1 abgewandten Seite des Primers 2, einer Abdeckschicht 5 auf der vom Primer 2 abgewandten Seite der Haftklebeschicht 3 und, im hier dargestellten Ausführungsbeispiel, auch noch einer klebstoffabweisenden Schicht 4 zwischen der Haftklebeschicht 3 und der Abdeckschicht 5 besteht. Im hier dargestellten und bevorzugten Ausführungsbeispiel soll es sich bei der Haftklebeschicht 3 um eine wiederablösbare, also von einem zu beklebenden Substrat, das hier nicht dargestellt ist, nach Andrücken des Haftetiketts wieder ablösbare Schicht handeln.

Im hier dargestellten und bevorzugten Ausführungsbeispiel besteht der Primer 2 aus isocyanatterminierten Polyurethan mit hochdisperser, pyrogener, hydrophobierter Kieselsäure als Füllstoff. Die Haftklebeschicht 3 besteht aus in Wasser dispergiertem Polyacrylsäureester. Das Auftragsgewicht des Primers 2 liegt bei ca. 2,0 g/m², das der Haftklebeschicht 3 bei ca. 20 g/m².

Fig. 1 zeigt den Zustand, bei dem die Schichtung aus Haftklebeschicht 3, klebstoffabweisender Schicht 4 und Abdeckschicht 5 hergestellt worden ist und die Haftklebeschicht 3 auch schon angetrocknet ist. Demgegenüber ist in diesem Zustand die Schichtung aus Druckträger 1 und Primer 2 soeben erst hergestellt worden, d. h. vor etwa 2 s. Der Primer 2 ist also erst geringfügig angetrocknet und wird nun, wie Fig. 2 zeigt, mit der Haftklebeschicht 3 in vollflächig anliegende Verbindung gebracht.

In Fig. 2 ist andeutungsweise durch gestrichelte Darstellung der Grenzlinien gezeigt, daß durch die Verwendung des erfindungsgemäßen Primers 2 eine reaktive Verbindung des Primers 2 einerseits zum Druckträger 1, andererseits zur Haftklebeschicht 3 erfolgt. Wird nun die Abdeckschicht 5 mit der klebstoffabweisenden Schicht 4 zu einem späteren Zeitpunkt, also beispielsweise nach der Aushärtzeit des Primers 2 von einer Woche, abgezogen und das Haftetikett insgesamt auf ein Substrat aufgeklebt, so kann das Haftetikett relativ einfach wieder abgelöst werden, da einerseits die Haftklebeschicht 3 insoweit eine erneute Ablösung gestattet, andererseits die Haftklebeschicht 3 über den Primer 2 zum Druckträger 1 eine innige Verbindung hat.

In einem ersten Zahlenbeispiel besteht der Druckträger 1 aus Etikettenpapier 80 g/m². Als Abdeckschicht 5 mit klebstoffabweisender Schicht 4 dient ein silikonisiertes Glassinepapier. Der Druckträger 1 wird auf der Rückseite mit Hilfe einer Walzenauftragsvorrichtung bei 95° C mit dem Primer 2 beschichtet, bei dem es sich hier um ein lösungsmittelfreies Kaschierharz handelt. Das Auftragsgewicht beträgt ca. 2 g/m². Innerhalb von 2 bis 3 s nach dem Auftrag des Primers 2 wird die zuvor schon fertiggestellte und vorgetrocknete Schichtung aus Haftklebeschicht 3, klebstoffabweisender Schicht 4 und Abdeckschicht 5 aufgebracht. Die Viskosität des Primers 2 zu diesem Verarbeitungszeitpunkt liegt je nach Einstellung zwischen 1.200 und 2.200 mPas, hier bei etwa 2.000 mPas.

Die Haftklebeschicht 3 ist im hier erläuterten Beispiel eine 51 %ige, wässrige Dispersion mit einem Trockenauftragsgewicht von ca. 20 g/m². Der durch den Primer 2 zu erwartenden zusätzlichen Härtung wird bei der Haftklebeschicht 3 mit der Beimengung von 5 % Weichmacher zum Trockengewicht Rechnung getragen.

Mit der zuvor erläuterten Verbundkonstruktion sind nach ca. einer Woche stabile Klebewerte erreicht. Das Haftetikett ist sehr alterungsbeständig und von einem Substrat auch nach längerer Zeit noch relativ leicht wieder ablösbar.

Im zweiten Beispiel wird bei gleichartiger Ausführung des Primers 2 eine andere Haftklebeschicht 3 verwendet, nämlich mit einem lösungsmittelhaltigen Klebemittel mit einem Trockenauftragsgewicht von ca. 22 g/m². Nach Verdunstung des Lösungsmittels wurde die gleiche Verarbeitungsweise wie im voranstehenden Ausführungsbeispiel gewählt.

## Patentansprüche

1. Haftetikett, bestehend aus einem Druckträger, einem Primer auf der Rückseite des Druckträgers, einer wiederablösbaren Haftklebeschicht auf der vom Druckträger abgewandten Seite des Primers, einer Abdeckschicht auf der vom Primer abgewandten Seite der Haftklebeschicht und ggf. einer klebstoffabweisenden Schicht zwischen der Haftklebeschicht und der Abdeckschicht, **dadurch gekennzeichnet,** daß der Primer (2) aus isocyanatterminiertem Polyurethan besteht und lösungsmittelfrei ist und daß die Haftklebeschicht (3) aus in Wasser dispergiertem Polyacrylsäureester (Acrylsäureestercopolymer) besteht.

2. Haftetikett nach Anspruch 1, dadurch gekennzeichnet, daß dem Primer (2) zur Eigenschaftsmodifikation mindestens ein Füllstoff zugesetzt ist, vorzugsweise eine hochdisperse, pyrogene, insbesondere hydrophobierte, vorzugsweise mittels Dichlordimethylsilan hydrophobierte Kieselsäure.

3. Haftetikett nach Anspruch 1 oder 2, dadurch gekennzeichnet, daß das Auftragsgewicht des Primers (2) zwischen 1,0 und 5,0 g/m², vorzugsweise zwischen 1,5 und 2,5 g/m², liegt.

4. Haftetikett nach einem der Ansprüche 1 bis 3, dadurch gekennzeichnet, daß das Trockenauftragsgewicht der Haftklebeschicht (3) ca. 17 bis 23 g/m², vorzugsweise ca. 18 bis 22 g/m², insbesondere ca. 20 g/m², beträgt.

5. Haftetikett nach einem der Ansprüche 1 bis 4, dadurch gekennzeichnet, daß die Abdeckschicht (5) mit der klebstoffabweisenden Schicht (4) gemeinsam als Silikonpapier ausgeführt ist.

6. Verfahren zur Herstellung eines Haftetiketts nach einem der Ansprüche 1 bis 5, bei dem der Primer auf die Rückseite des Druckträgers aufgetragen wird, dadurch gekennzeichnet, daß die Haftklebeschicht auf die Abdeckschicht bzw. die mit der Abdeckschicht verbundene klebstoffabweisende Schicht aufgetragen wird, daß danach ggf. die Haftklebeschicht angetrocknet wird und daß danach die Schichtung aus Abdeckschicht, ggf. klebstoffabweisender Schicht und Haftklebeschicht und die Schichtung aus Druckträger und Primer durch Auflage der Haftklebeschicht auf dem Primer vollflächig miteinander verbunden werden.

7. Verfahren nach Anspruch 6, dadurch gekennzeichnet, daß die den Auftrag der Haftklebeschicht selbst betreffenden Verfahrensschritte zeitlich zuerst ablaufen und daß die Verbindung der beiden Schichtungen zeitlich unmittelbar nach dem Auftrag des Primers auf den Druckträger erfolgt, vorzugsweise etwa 1 s bis 5 s, insbesondere ca. 2 bis 3 s, nach dem Auftrag des Primers auf den Druckträger erfolgt.

8. Verfahren nach Anspruch 6 oder 7, dadurch gekennzeichnet, daß die Auftragstemperatur des Primers (2) etwa 90° bis 100° C, vorzugsweise etwa 95° C, beträgt.

## Claims

1. An adhesive label comprising a pressure backing, a primer on the back of the pressure backing, a pressure-sensitive layer, which can be removed again, on the side of the primer remote from the pressure backing, a masking layer on the side of the pressure-sensitive layer remote from the primer, and possibly an adhesive-rejecting layer between the pressure-sensitive layer and the masking layer, characterised in that the primer (2) comprises a polyurethane with terminal isocyanate groups and is solvent-free, and that the pressure-sensitive layer (3) comprises a polyacrylic acid ester (acrylic acid ester copolymer) dispersed in water.

2. An adhesive label according to Claim 1, characterised in that at least one filler is added to the primer (2) to modify its properties, which filler is preferably a micro-dispersed, pyrogenic silicic acid, particularly a silicic acid made water-repellent, preferably made water-repellent by means of dichlorodimethylsilane.

3. An adhesive label according to Claims 1 or 2, characterised in that the deposited weight of the primer (2) is between 1.0 and 5.0 g/m², preferably between 1.5 and 2.5 g/m².

4. An adhesive label according to any one of Claims 1 to 3, characterised in that the dry deposited weight of the pressure-sensitive layer (3) is about 17 to 23 g/m², preferably about 18 to 22 g/m², most preferably about 20 g/m².

5. An adhesive label according to any one of Claims 1 to 4, characterised in that the masking layer (5) is formed jointly with the adhesive-rejecting layer (4) as silicone-treated paper.

6. A process for manufacturing an adhesive label according to any one of Claims 1 to 5, in which the primer is applied to the back of the pressure backing, characterised in that the pressure-sensitive layer is applied to the masking layer or to the adhesive-rejecting layer attached to the masking layer, that thereafter the pressure-sensitive layer is dried if necessary, and that thereafter the arrangement of layers comprising the masking layer, possibly the adhesive-rejecting layer and the pressure-sensitive layer and the arrangement of layers comprising the pressure backing and the primer are bonded to each other all over by the application of the pressure-sensitive layer to the primer.

7. A process according to Claim 6, characterised in that the process steps which concern the application of the pressure-sensitive layer itself comprise the first chronological procedure and that the bonding of the two arrangements of layers follows chronologically immediately after the application of the primer to the pressure backing, preferably about 1 second to 5 seconds, most preferably about 2 to 3 seconds, after the application of the primer to the pressure backing.

8. A process according to Claims 6 or 7, characterised in that the application temperature of the primer (2) is about 90° to 100°C, preferably about 95°C.

## Revendications

1. Etiquette auto-adhésive constituée par un support de pression, par une couche de fond sur la face dorsale du support de pression, par une couche auto-adhésive que l'on peut à nouveau décoller sur le côté de la couche de fond qui se détourne du support de pression, par une couche de recouvrement sur le côté de la couche auto-adhésive qui se détourne de la couche de fond et éventuellement par une couche anti-adhésive entre la couche auto-adhésive et la couche de recouvrement, caractérisée en ce que la couche de fond (2) est constituée par un polyuréthanne à terminaison isocyanate et est exempte de solvant, et en ce que la couche auto-adhésive (3) est constituée par un ester polyacrylique dispersé (un copolymère d'ester acrylique).

2. Etiquette auto-adhésive selon la revendication 1, caractérisée en ce qu'on ajoute, à la couche de fond (2), au moins une matière de charge à des fins de modification des propriétés, de préférence un acide silicique fortement dispersé, pyrogéné, en particulier rendu hydrophobe, de préférence rendu hydrophobe au moyen de dichlorodiméthylsilane.

3. Etiquette auto-adhésive selon la revendication 1 ou 2, caractérisée en ce que le poids d'application de la couche de fond (2) se situe entre 1,0 et 5,0 g/m², de préférence entre 1,5 et 2,5 g/m².

4. Etiquette auto-adhésive selon l'une quelconque des revendications 1 à 3, caractérisée en ce que le poids d'application à sec de la couche auto-adhésive (3) s'élève d'environ 17 à 23 g/m², de préférence d'environ 18 à 22 g/m², en particulier à environ 20 g/m².

5. Etiquette auto-adhésive selon l'une quelconque des revendications 1 à 4, caractérisée en ce que la couche de recouvrement (5) est réalisée conjointement avec la couche anti-adhésive (4) sous forme de papier silicone.

6. Procédé pour la fabrication d'une étiquette auto-adhésive selon l'une quelconque des revendications 1 à 5, dans lequel on applique la couche de fond sur la face dorsale du support de pression, caractérisé en ce qu'on applique la couche auto-adhésive sur la couche de recouvrement ou sur la couche anti-adhésive liée à la couche de recouvrement, en ce qu'ensuite, on sèche éventuellement la couche auto-adhésive et en ce qu'on relie alors l'un à l'autre sur toute leur surface le stratifié constitué par une couche de recouvrement, éventuellement par la couche anti-adhésive et par la couche auto-adhésive et le stratifié constitué par le support de pression et par la couche de fond par application de la couche auto-adhésive sur la couche de fond.

7. Procédé selon la revendication 6, caractérisé en ce que, quant à la succession dans le temps, on met en oeuvre d'abord les étapes opératoires concernant l'application de la couche auto-adhésive elle-même et en ce que la liaison des deux stratifiés a lieu, quant à la succession dans le temps, immédiatement après l'application de la couche de fond sur le support de pression, de préférence d'environ 1 seconde à 5 secondes, en particulier d'environ 2 à 3 secondes après l'application de la couche de fond sur le support de pression.

8. Procédé selon la revendication 6 ou 7, caractérisé en ce que la température d'application de la couche de fond (2) s'élève d'environ 90° à 100°C, de préférence à environ 95°C.
